(19) Europäisches Patentamt
European Patent Office
Office européen des brevets

(11) **EP 2 718 300 B1**

(12) **EUROPEAN PATENT SPECIFICATION**

(45) Date of publication and mention
of the grant of the patent:
**09.08.2017 Bulletin 2017/32**

(51) Int Cl.:
***C07F 3/00*** (2006.01)

(21) Application number: **12725770.7**

(86) International application number:
**PCT/EP2012/060586**

(22) Date of filing: **05.06.2012**

(87) International publication number:
**WO 2012/168232 (13.12.2012 Gazette 2012/50)**

(54) **BA ISOTOPE CONTAINING COMPLEXES, METHODS FOR MANUFACTURING OF THE SAME AND THEIR USE AS TRACERS**

BA-ISOTOP ENTHALTENDE KOMPLEXE, VERFAHREN ZU IHRER HERSTELLUNG UND IHRE VERWENDUNG ALS TRACER

COMPLEXES CONTENANT UN ISOTOPE DE BA, PROCÉDÉS DE FABRICATION DE CES COMPLEXES ET LEUR UTILISATION COMME TRACEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.06.2011 NO 20110816**

(43) Date of publication of application:
**16.04.2014 Bulletin 2014/16**

(73) Proprietor: **Institutt For Energiteknikk
2007 Kjeller (NO)**

(72) Inventors:
• **STAVSETRA, Liv
0862 Oslo (NO)**
• **BJØRNSTAD, Tor
1481 Hagan (NO)**

(74) Representative: **Valea AB
Box 1098
405 23 Göteborg (SE)**

(56) References cited:
• **ANDREW H. BOND ET AL: "Synergistic Solvent Extraction of Alkaline Earth Cations by Mixtures of Di-n-octylphosphoric Acid and Stereoisomers of Dicyclohexano-18-crown-6", ANALYTICAL CHEMISTRY, vol. 71, no. 14, 1 July 1999 (1999-07-01), pages 2757-2765, XP55041475, ISSN: 0003-2700, DOI: 10.1021/ac9900681**

• **MUKHOPADHYA K ET AL: "Separation of 134Cs and 133Ba using 18-crown-6 ether", RADIOACTIVITY & RADIOCHEMISTRY : R & R ; A JOURNAL OF APPLIED MEASUREMENT, ATLANTA, GA. : CARETAKER PUBL, US, vol. 11, 1 January 2000 (2000-01-01), pages 19-22, XP009163744, ISSN: 1045-845X**

• **D. NEWTON ET AL: "Long-term Retention of Injected Barium-133 in Man", RADIATION PROTECTION DOSIMETRY, vol. 97, no. 3, 1 November 2001 (2001-11-01), pages 231-240, XP55041451, ISSN: 0144-8420, DOI: 10.1093/oxfordjournals.rpd.a006668**

• **TOSHIYUKI FUJII ET AL: "Temperature Dependence of Isotope Effects of Barium Using a Crown Ether", JOURNAL OF NUCLEAR SCIENCE AND TECHNOLOGY, vol. 39, no. 4, 1 April 2002 (2002-04-01), pages 447-450, XP55041052, ISSN: 0022-3131, DOI: 10.1080/18811248.2002.9715221**

• **RUBEL CHAKRAVARTY ET AL: "Ammonium molybdophosphate impregnated alumina microspheres as a new generation sorbent for chromatographicCs/Ba generator", JOURNAL OF CHROMATOGRAPHY, ELSEVIER SCIENCE PUBLISHERS B.V, NL, vol. 1220, 29 November 2011 (2011-11-29), pages 82-91, XP028121748, ISSN: 0021-9673, DOI: 10.1016/J.CHROMA.2011.11.059 [retrieved on 2011-12-07]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD OF THE INVENTION**

The invention concerns Ba isotope containing complexes useful in the field of tracer technology for industrial applications in general and in particular for the oil industry.

**BACKGROUND OF THE INVENTION**

Institute for Energy Technology (IFE) in Norway has, since the nineteen sixties, developed tracer technology for industrial applications. Since the mid 1980ties a targeted and systematic development has taken place on development of tracer technology for industrial applications in general and in particular for the oil industry. Tracers for well-to-well, near-well, single-well and fluid processing examinations have been developed. Some of these tracers are radioactive, but the majority is non-radioactive chemical tracers.

For industrial process mass transportation studies a very attractive method is the use of gamma-emitting short-lived radiotracers. In this way non-intrusive and continuous and on-line examinations can be performed of mass transport inside nontransparent vessels with thick metal walls due to the penetrating power of the gamma rays and detectors placed outside the vessels. The short half-life of the radiotracer ensures that sufficiently strong sources may be used and still the remaining activity dies rapidly out and leaves no radioactive waste after the examination.

Such short-lived gamma-emitting radionuclides, either non-complexed or coupled to a carrier molecule (in an organometallic compound or as a chemical complex), may be used in single-phase or multi-phase mass transport studies. The phases may typically be oil, water, gas or solids. However, until recently, the use of this method has been limited to regions in relatively close vicinity of a production facility like a nuclear reactor, a neutron generator or a particle accelerator.

So-called radiotracer generators are small-sized industrial generators for production of short-lived radiotracers for various fluid and solid phases based on available nuclear genetic mother-daughter relationships. Such generators, together with nuclear electronics, can constitute an important automatic monitoring tool on unmanned petroleum installations, also known as "e-field concept".

Anal. Chem. 1999, 71(4), 2757-2765 discloses partitioning of Ca(II), Sr (II) and Ba(II) in solvent extraction systems comprising di-n-octylphosphoric acid (HDOP) and indiviudual stereoisomers of dicyclohexano-18-crown-6 (DCH18C6) in toluene.

Radiochem., 2000, 11, 19-22 discloses quantitative separation of 134Cs and 133Ba using 18-crown-6 ether.

Rad. Protec. Dos., 2001, 97(3), 231-40 describes long-term retention of injected barium-133 in man. Data are presented on the whole-body retention of $^{133}$Ba, having a half-life of 10.74 years, over periods of up to 13 years after injection into six healthy male volunteers aged 25-81, and on their levels of biochemical markers for bone turnover.

J. Nucl. Sci. Tech., 2002, 39(4), 447-50 describes temperature dependence of isotope effects of barium using a crown ether. Barium isotope effects were studied at 273.3 through 323.2 K in a liquid-liquid extraction system using dicyclohexano-18-crown-6. The isotope effects appeared to be ruled by conventional mass-dependent theory.

J. Chromatog., 2011, 1220, 82-91 discloses ammonium molybdophosphate impregnated alumina microspheres as a sorbent for the development of a $^{137}$Cs/$^{137m}$Ba chromatographic column generator for industrial radiotracer investigations.

There is a problem with known tracers that they are not thermally stable for the duration of the operations and suffer from partitioning into aqueous phases and sorption onto solid phases.

**SUMMARY OF THE INVENTION**

It is an object of the present invention to overcome or at least mitigate some of the problems associated with the prior art.

This object is entirely or partly achieved by a use according to claim 1. Embodiments are specified in the dependent claims and as described below.

Accordingly, in an aspect of the invention there is provided a complex comprising one or more substituted 18-crown-6 ether, one or more lipophilic acid, and a barium isotope selected from the group consisting of: $^{128}$Ba, $^{131}$Ba, $^{133}$Ba and $^{137m}$Ba. The complex may be used as a radioactively labelled tracer.

In a further aspect of the invention there is provided a method for the manufacture of a complex comprising $^{137m}$Ba, **characterised by** comprising the steps of:

 a. elution of $^{137m}$Ba from a radionuclide generator, and

b. complexation of $^{137m}$Ba with substituted 18-crown-6 and a lipophilic acid.

In a further aspect of the invention there is provided the use of a complex as defined hereinbefore or hereinafter as a radioactively labelled tracer for studies and measurements of mass transport of a single or several organic phases in multiphase transport in one or more of the set fluid handling systems, confined tubes, open conduits, porous media and open unconfined flow systems.

In still an aspect of the invention there is provided a complex obtainable according to a method comprising the steps of:

a. elution of $^{137m}$Ba from a radionuclide generator, and

b. complexation of $^{137m}$Ba with one or more substituted 18-crown-6 ether and one or more lipophilic acid.

In still an aspect of the invention there is provided a complex obtainable according to a method comprising the steps of:

a. producing $^{128}$Ba in $^3$He and $^4$He reactions on xenon isotopes at small size accelerator facilities, and

b. complexation of $^{128}$Ba with one or more substituted 18-crown-6 ether and one or more lipophilic acid.

In still an aspect of the invention there is provided a complex obtainable according to a method comprising the steps of:

a. producing $^{131}$Ba in neutron irradiation of the isotope $^{130}$Ba, and

b. complexation of $^{131}$Ba with one or more substituted 18-crown-6 ether and one or more lipophilic acid.

It is a complex chemical problem to utilize the short- lived $^{137m}$Ba ($T_{1/2}$ = 2.55 min) generated by decay of the long-lived $^{137}$Cs ($T_{1/2}$ = 30 y) as a tracer for oil, or organic phases, in a single-phase or multiphase mixture of fluids and solids. The tracer of the present invention, i.e. the complex as defined hereinbefore or hereinafter, has negligible partitioning into aqueous phases and negligible sorption onto solid phases.

The short-lived radionuclide $^{137m}$Ba decays by gamma-ray emission with a 2.55 min half-life to the stable $^{137}$Ba-isotope. $^{137m}$Ba is a decay product of $^{137}$Cs, which has a half-life of 30 years. A practical way of extracting $^{137m}$Ba from $^{137}$Cs is by a radionuclide generator. In the radionuclide generator $^{137}$Cs is adhered to a stationary matrix such as an ion exchanger, and it is possible to chemically separate the two radionuclides by means of an appropriate eluting agent. The coupling of the radionuclide generator with a system comprising chemical complexing agent(s) for radionuclide labelling is referred to as a radiotracer generator. The $^{137m}$Ba oil tracer of the present invention may be produced by the use of a radiotracer generator.

## BRIEF DESCRIPTION OF THE DRAWINGS

Fig. 1 shows a proposed chemical structure for a complex in accordance with the invention, wherein Ba$^{2+}$ coordinates to DC18C6 and HDNNS is present as counter ions.

Fig. 2 shows a radiotracer generator represented schematically.

Fig. 3 shows schematically an oil and gas multiphase separator monitoring system, including a radiotracer generator.

## DETAILED DESCRIPTION OF THE INVENTION

The present invention is based on the unexpected finding that $^{137m}$Ba forms a complex with a crown ether such as DC18C6 in the presence of a lipophilic acid such as HDNNS, and that the rate of formation of this complex is very fast compared to the half-life of $^{137m}$Ba.

Thus, in an aspect there is provided a complex comprising one or more substituted 18-crown-6 ether, one or more lipophilic acid, and a barium isotope selected from the group consisting of: $^{128}$Ba, $^{131}$Ba, $^{133}$Ba and $^{137m}$Ba.

In an embodiment of the invention there is provided a complex comprising $^{137m}$Ba, one or more substituted 18-crown-6 ether and one or more lipophilic acid.

Crown ethers are water-soluble macrocyclic polyethers, and there are many variations such as 18-crown-6, 21-crown-7 or 30-crown-10 that could be used for embodiments of the present invention. Crown ethers strongly bind certain cations thereby forming complexes. The oxygen atoms are well situated to coordinate with a cation located at the interior of the ring, whereas the exterior of the ring is hydrophobic.

Lipophilic acids may function as a complexing agents and/or as cation exchangers. For instance, the lipophilic acid may be dinonyl naphthalene sulfonic acid. There are also other known complexing agents that are similar to dinonyl naphthalenesulfonic acid (HDNNS), e.g. other sulfonic acid-based strong acid cation exchange medium where an organophilic sulfonic acid is dissolved in an organic diluent.

The complex may be formed in the extraction of barium ions by isooctane solutions of dicyclohexano-18-crown-6 (DC18C6) and dinonyl naphthalene sulfonic acid, (HDNNS). Due to the short half-life of $^{137m}Ba$, the extraction has to immediately follow the elution of $^{137m}Ba$ from a radionuclide generator. An example of a $^{137}Cs$-$^{137m}Ba$ radionuclide generator is based on the ion exchanger $K_2[CoFe(CN)_6]$ as matrix. This ion exchanger is especially selective for cesium. With this ion exchanger solutions of dilute sodium chloride and hydrochloric acid are suitable for elution of $^{137m}Ba$.

In one aspect of the invention there is provided the coupling, that is the complexation, of $^{137m}Ba$ with a crown ether such as DC18C6 and a lipophilic acid and/or organic complexation agent such as HDNNS into an organically soluble complex with a high distribution ratio to the oil phase or organic phases if used in other industries than oil and gas.

The distribution ratio is for oil phase defined as

$$D_c = [^{137m}Ba]_{tot,oil,eq}/[^{137m}Ba]_{tot,aq,eq}$$

wherein

$[^{137m}Ba]_{tot,oil,eq}$ the total analytical concentration of $^{137m}Ba$-compound in the oil phase at distribution equilibrium
$[^{137m}Ba]_{tot,aq,eq}$ the total analytical concentration of $^{137m}Ba$-compound in the aqueous phase at distribution equilibrium

For a successful industrial application it is not necessary to determine or know the exact molecular composition of the extractable compound. While not wishing to be bound by any specific theory, it is believed that the chemical structure of the complex as defined in any aspect, embodiment or claim hereinbefore or hereinafter involves coordination of the barium isotope such as $^{128}Ba$, $^{131}Ba$, $^{133}Ba$ and $^{137m}Ba$ to the crown ether with the anion of the lipophilic acid acting as counter ion.

Tracer tests using the complex of the present invention having short-lived gamma emitting tracers are well suited for monitoring of mass transport in fluid flow systems, such as pipings, open conduits, unconfined open systems, porous systems, and fluid handling systems. They are especially well suited for subsea, borehole, or reservoir applications, as the short-life radioactive element quickly becomes acceptable for the environment.

Generally, tracers can be used to study and monitor for instance chemical, biochemical and petrochemical processes. The complex as defined in any aspect, embodiment or claim hereinbefore or hereinafter being a radioactively labelled tracer can be used as marker of the oil phase (i.e. liquid hydrocarbon phase) in multiphase application. A particularly useful application of the complex as defined in any aspect, embodiment or claim hereinbefore or hereinbelow is as a radioactively labelled tracer for trouble-shooting and condition is monitoring of process equipment such as oil and gas multiphase separators or scrubbers.

Other organic compounds and/or organic solvents will also show an interesting differential affinity for the complex as defined hereinbefore or hereinafter, i.e the radioactively labelled tracer, and the present invention may thus be used for monitoring processes in such different areas as for example water processing plants and food production plants, such as in sugar production.

Several approaches have been tried to develop chemically and thermally stable complexes of $Ba^{2+}$. For convenience, e.g. in laboratory work, the gamma emitter $^{133}Ba$ may be used as a substitute for $^{137m}Ba$ or other barium isotopes, when the longer half-life (approximately 10.5 years for $^{133}Ba$ versus 2.5 minutes for $^{137m}Ba$) is practical.

In order to be useful as a tracer the formation of the complex as defined in any aspect, embodiment or claim hereinbefore or hereinafter must be sufficiently fast compared to the half-life of the barium isotope such as $^{137m}Ba$. By sufficiently fast formation of the complex as defined in any aspect, embodiment or claim hereinbefore or hereinafter is meant that the complex is formed during approximately 15 seconds or less of extraction of the barium isotope into an organic phase from a slightly acidic aqueous solution of NaCl. The organic phase may be oil or an organic solvent such as isooctane, octane, decane, toluene or xylene and further comprises a crown ether and a lipophilic acid. The slightly acidic aqueous solution of NaCl may be an aqueous solution of 0.15 M NaCl and 0.1 M HCl.

In an embodiment of the invention there is provided a complex as defined in any aspect, embodiment or claim hereinbefore or hereinafter, wherein said complex is formed during approximately 15 seconds or less of extraction of the barium isotope into an organic phase from a slightly acidic aqueous solution of NaCl.

In an embodiment of the invention there is provided a complex as defined in any aspect, embodiment or claim hereinbefore or hereinafter, wherein said complex is soluble in oil or in an organic solvent.

In this document, examples of suitable organic solvents are isooctane, octane, decane, toluene or xylene, but is not restricted to these solvents.

In an embodiment of the invention there is provided a complex as defined in any aspect, embodiment or claim hereinbefore or hereinafter, wherein said complex is soluble in oil or in an organic solvent and is formed during approximately 15 seconds or less of extraction of the barium isotope into an organic phase from a slightly acidic aqueous solution of NaCl.

In an embodiment of the invention there is provided a complex comprising $^{137m}Ba$, one or more substituted 18-crown-6 ether and one or more lipophilic acid.

In an embodiment of the invention there is provided a complex comprising $^{137m}Ba$, dicyclohexano-18-crown-6 and dinonyl naphthalene sulfonic acid.

In an embodiment of the invention there is provided a complex comprising $^{133}Ba$, one or more substituted 18-crown-6 ether and one or more lipophilic acid.

In an embodiment of the invention there is provided a complex comprising $^{133}Ba$, dicyclohexano-18-crown-6 and dinonyl naphthalene sulfonic acid.

In an embodiment of the invention there is provided a complex as defined in any aspect, embodiment or claim hereinbefore or hereinafter, characterized in that the one or more substituted 18-crown-6 ether is mono- or disubstituted. By monosubstitued is meant that the 18-crown-6 ether carries one substituent. By disubstituted is meant that the 18-crown-6 ether carries two substituents.

In an embodiment of the invention there is provided a complex as defined in any aspect, embodiment or claim hereinbefore or hereinafter, characterized in that the one or more substituted 18-crown-6 ether is selected from the group consisting of: dicyclohexano-18-crown-6, di-(tert-butyl-cyclohexano)-18-crown-6, dibenzo-18-crown-6, and di-(tert-butyl-benzo)- 18-crown-6.

In an embodiment of the invention there is provided a complex as defined in any aspect, embodiment or claim hereinbefore or hereinafter, characterized in that the one or more lipophilic acid is a sulphonic acid or a carboxylic acid.

In an embodiment of the invention there is provided a complex as defined in any aspect, embodiment or claim hereinbefore or hereinafter, characterized in that the one or more lipophilic acid is dinonyl naphthalene sulfonic acid or didodecyl naphthalene sulphonic .

In an embodiment of the invention there is provided a complex as defined in any aspect, embodiment or claim hereinbefore or hereinafter, characterized by being an organically soluble complex comprising $^{137m}Ba$, dicyclohexano-18-crown-6 and dinonyl naphthalene sulfonic acid. By "organically soluble complex" is understood that the complex is soluble in oil or in an organic solvent such as isooctane.

In a further embodiment of the invention there is provided a method for the manufacture of a a complex comprising $^{137m}Ba$ as defined in any aspect, embodiment or claim hereinbefore or hereinafter, characterised by comprising the steps of:

    a. elution of $^{137m}Ba$ from a radionuclide generator, and

    b. complexation of $^{137m}Ba$ with one or more substituted18-crown-6 ether and one or more lipophilic acid.

In a further embodiment of the invention there is provided a method for the manufacture of a complex comprising $^{137m}Ba$ as defined in any aspect, embodiment or claim hereinbefore or hereinafter, comprising the steps of:

    a. elution of $^{137m}Ba$ from a radionuclide generator, and

    b. complexation of $^{137m}Ba$ with one or more substituted18-crown-6 ether and one or more lipophilic acid, wherein step b follows immediately after step a.

In a further embodiment of the invention there is provided a method as defined hereinbefore or hereinafter, wherein the elution step a takes place using an eluent comprising a slightly acid aqueous solution of NaCl. The concentration of NaCl may be 0.15 M. The acid may be HCl. The concentration of HCl may be 0.1 HCl. The elution step a results in the formation of a solution of $^{137m}Ba$ in the eluent.

In a further embodiment of the invention there is provided a method as defined hereinbefore or hereinafter, wherein step b takes place by extraction of the solution of $^{137m}Ba$ in the eluent formed in step a with an organic phase comprising oil or an organic solvent, one or more crown ethers and one or more lipophilic acids.

In a further embodiment of the invention there is provided a method according to any aspect, embodiment or claim hereinbefore or hereinafter, characterized in that the one or more substituted 18-crown-6 is mono- or disubstituted.

In a further embodiment of the invention there is provided a method according to any aspect, embodiment or claim hereinbefore or hereinafter, characterized in that the one or more substituted 18-crown-6 ether is selected from the group consisting of: dicyclohexano-18-crown-6, di-(tert-butyl-cyclohexano)-18-crown-6, dibenzo-18-crown-6, and di-(tert-butyl-benzo)-18-crown-6.

In a further embodiment of the invention there is provided a method according to any aspect, embodiment or claim hereinbefore or hereinafter, characterized in that the one or more lipophilic acid is a sulphonic acid or carboxylic acid.

In a further aspect of the invention there is provided a complex obtainable by a method comprising the steps of:

a. elution of $^{137m}$Ba from a radionuclide generator, and

b. complexation of $^{137m}$Ba with one or more substituted 18-crown-6 ether and one or more lipophilic acid. The substituted one or more 18-crown-6 ether and the one or more lipophilic acid are as defined in any aspect, embodiment or claim hereinbefore or hereinafter.

In a further aspect of the invention there is provided a complex obtainable by a method comprising the steps of:

a. elution of $^{137m}$Ba from a radionuclide generator, and

b. complexation of $^{137m}$Ba with one or more substituted 18-crown-6 ether and one or more lipophilic acid, wherein step b follows immediately after step a. The substituted one or more 18-crown-6 ether and the one or more lipophilic acid are as defined in any aspect, embodiment or claim hereinbefore or hereinafter.

In still an aspect of the invention there is provided a complex obtainable according to a method comprising the steps of:

a. producing $^{128}$Ba in $^3$He and $^4$He reactions on xenon isotopes at small size accelerator facilities, and

b. complexation of $^{128}$Ba with one or more substituted 18-crown-6 ether and one or more lipophilic acid. The substituted one or more 18-crown-6 ether and the one or more lipophilic acid are as defined in any aspect, embodiment or claim hereinbefore or hereinafter.

In still an aspect of the invention there is provided a complex obtainable according to a method comprising the steps of:

a. producing $^{128}$Ba in $^3$He and $^4$He reactions on xenon isotopes at small size accelerator facilities, and

b. complexation of $^{128}$Ba with one or more substituted 18-crown-6 ether and one or more lipophilic acid, wherein step b follows immediately after step a. The substituted one or more 18-crown-6 ether and the one or more lipophilic acid are as defined in any aspect, embodiment or claim hereinbefore or hereinafter.

In still an aspect of the invention there is provided a complex obtainable according to a method comprising the steps of:

a. producing $^{131}$Ba in neutron irradiation of the isotope $^{130}$Ba, and

b. complexation of $^{131}$Ba with one or more substituted 18-crown-6 ether and one or more lipophilic acid. The substituted one or more 18-crown-6 ether and the one or more lipophilic acid are as defined in any aspect, embodiment or claim hereinbefore or hereinafter.

In still an aspect of the invention there is provided a complex obtainable according to a method comprising the steps of:

a. producing $^{131}$Ba in neutron irradiation of the isotope $^{130}$Ba, and

b. complexation of $^{131}$Ba with one or more substituted 18-crown-6 ether and one or more lipophilic acid, wherein step b follows immediately after step a. The substituted one or more 18-crown-6 ether and the one or more lipophilic acid are as defined in any aspect, embodiment or claim hereinbefore or hereinafter.

In a further embodiment of the invention there is provided a method according to any aspect, embodiment or claim hereinbefore or hereinafter, characterized in that the one or more lipophilic acid is dinonyl naphthalene sulfonic acid or didodecyl naphthalene sulphonic acid.

In a further aspect of the invention there is provided the use of a complex as defined in any aspect, embodiment or claim hereinbefore or hereinafter as a radioactively labelled tracer for studies and measurements of mass transport of a single organic phase in multiphase transport in one or more of the set fluid handling systems, confined tubes, open conduits, porous media and open unconfined flow systems.

In a further aspect of the invention there is provided the use of a complex as defined in any aspect, embodiment or claim hereinbefore or hereinafter as a radioactively labelled tracer for studies and measurements of mass transport of several organic phases in multiphase transport in one or more of the set fluid handling systems, confined tubes, open conduits, porous media and open unconfined flow systems.

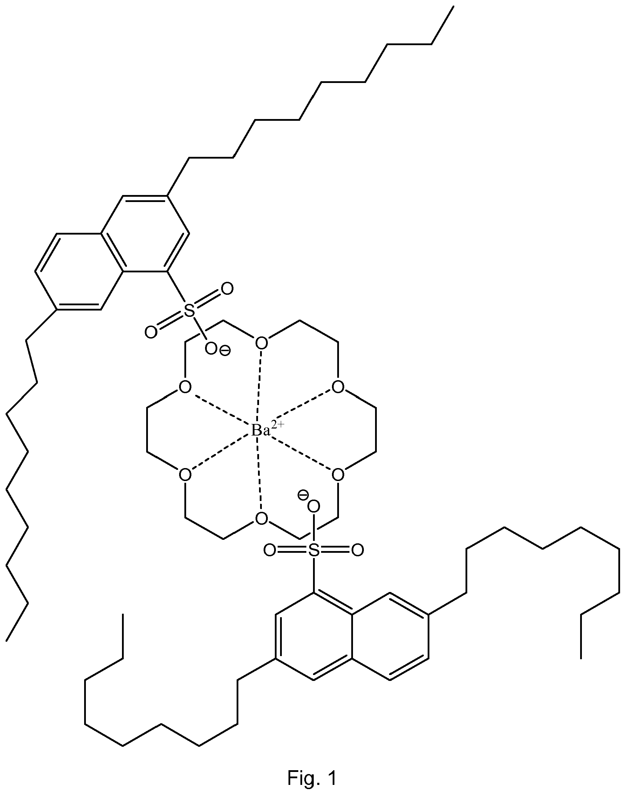

Fig.1 shows an embodiment of the invention wherein the radioactively labelled tracer is formed from $Ba^{2+}$, dicyclohexano-18-crown-6, DC18C6 and dinonyl naphthalene sulfonic acid. The figure shows a proposed structure for the complex formed. The ionic radius of Ba of 1.35 Å fits well with the cavity of DC18C6 of 1.3-1.6 Å. The large lipophilic groups of the lipophilic acid facilitate the extraction of the tracer into the organic phase and act as counter ion.

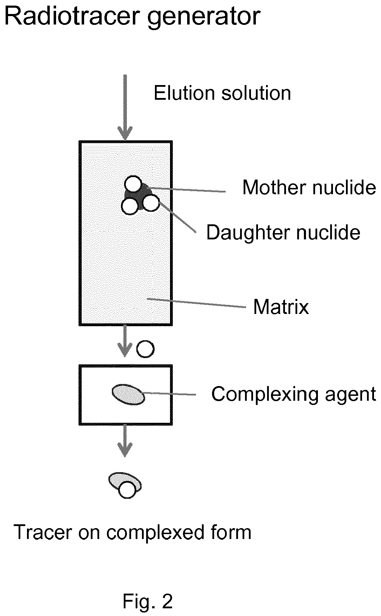

Fig. 2 shows a radiotracer generator of the present invention that is a chemical, physical and mechanical device which contains a radionuclide generator and possible additional features such as labelling chemistry (kits) which can be automatically or semi-automatically operated to produce desired tracer compounds based on the separated radionuclide daughter compound from the generator. It is based on the nuclear mother-daughter genetic relationship which allows for the separation and extraction of the short-lived daughter radionuclide from the longer-lived mother radionuclide. The elution agent is added to the column, eluting the radionuclide which in turn is mixed with said crown ether and lipophilic acid thereby producing the complex, i.e. the tracer, of the present invention.

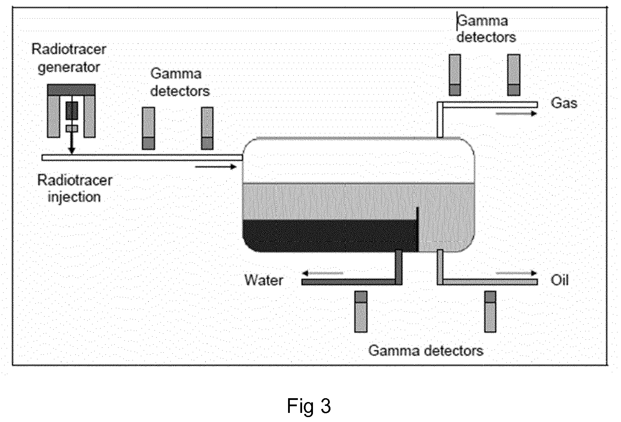

Fig. 3 shows a multiphase separator monitoring system, including a radionuclide generator of the present invention. The performances of a multiphase separator are measured through several parameters, of which throughput, liquid carry-over in the gas phase, oil in water, water in oil, and also (not represented here), capture and extractions of solids are the most significant. Liquid carry-over is a problem in the oil industry, and tracers are commonly used for measuring it. After injection at the radiotracer generator, the tracer producing gamma radiations is detected by gamma detectors before entering separator, and then at the different outlets. From detection time-difference at the outlets, residence time distribution in the separator can be measured for all phases. From the level of radiation energy detected, the amount of unwished phase can be estimated. As multiphase flows are complex, models are used to have an improved picture of velocities and phase distributions inside the outlet pipes.

For other industries than oil and gas, such as chemical industries, the present invention can be used with organic phases, rather than with hydrocarbons or oil, thus in the embodiments discussed in this document the term oil (organic) phases is used for oil phases or organic phases. The radionuclides $^{133}Ba$ and $^{137m}Ba$ may both be used, as explained, when e.g. the longer half-life or availability of $^{133}Ba$ is advantageous. The isotopes $^{128}Ba$ and $^{131}Ba$ may also be used.

Further aspects

In an embodiment of the present invention the resulting complex of the complexing reaction of radioactive $Ba^{2+}$ isotopes ($^{133}Ba$ and $^{137m}Ba$) with DC18C6 and HDNNS is used as a tracer for oil (organic) phases.

In another embodiment of the present invention a chemical reaction (reaction kit) is coupled to a $^{137}Cs/^{137m}Ba$ radionuclide generator to produce a radiotracer generator for oil (organic) phases based on the radionuclide $^{137m}Ba$

In another embodiment said complex between the radionuclides $^{133}Ba$, respectively $^{137m}Ba$, with DC18C6 and HDNNS is used for studies and measurements of mass transport of single organic phase in confined tubes and fluid handling systems, open conduits, in porous media or in open unconfined flow systems

In another embodiment said complex between the radionuclides $^{133}Ba$, respectively $^{137m}Ba$, with DC18C6 and HDNNS is used for studies and measurements of mass transport of organic phase in multiphase transport in confined tubes and fluid handling systems, open conduits, in porous media or in open unconfined flow systems

In another embodiment the $^{137}Cs/^{137m}Ba$ /DC18C6+HDNNS radiotracer generator is used in off-line operations (i.e. manual tracer injections) and in on-line automatic or remotely operated tracer injections for studies and measurements of mass transport of a single organic phase in confined tubes and fluid handling systems, open conduits, in porous media or in open unconfined flow systems.

In another embodiment the $^{137}Cs/^{137m}Ba$ /DC18C6+HDNNS radiotracer generator is used in off-line operations (i.e. manual tracer injections) and in on-line automatic or remotely operated tracer injections for studies and measurements of mass transport of organic phase in multiphase transport in confined tubes and fluid handling systems, open conduits, in porous media or in open unconfined flow systems.

The invention is illustrated, but not limited, by the following Examples.

## EXAMPLES

Abbreviations

| | |
|---|---|
| 18-crown-6 | 1,4,7,10,13,16-hexaoxacyclooctadecane |
| DC18C6 | dicyclohexano 18-crown-6 |
| HDNSS | dinonyl naphthalene sulfonic acid |
| s | second(s) |
| y | year(s) |
| p.a. | pro analysis |
| ml | milliliter(s) |
| M | mole/ liter |

## Materials

Radioactive barium, $^{133}Ba$ ($T_{1/2}$ = 10.51 y) in chloride form in 0.1 M HCl solution was supplied by Eckert & Ziegler. HDNNS was obtained from Sigma Aldrich as a 50% solution in heptane. The heptane was removed in a rotary evaporator and the resulting solution was purified using an anion exchange technique similar to the procedure described in J. Inorg. Nucl. Chem. 35 (1973) 3926. All other chemicals were of p.a. quality and obtained from Sigma Aldrich, except 1-dodecanol which was from Fluka. Liquid scintillation cocktail, Ultima Gold XR was from Perkin Elmer.

## Solvent extraction experiments

The barium chloride solutions were of 0.154 M NaCl and 0.1 M HCl. These concentrations of NaCl and HCl were chosen as they form a suitable elution solution for the $^{137}Cs/ ^{137m}Ba$ radionuclide generator. The organic phase consisted of 0.008 M HDNNS, 0.004 M DC18C6 and 0.04 M 1- dodecanol in isooctane. 1-dodecanol is added as a modifier, to ensure good phase separation in the extraction experiments. The extraction solutions were pre-equilibrated with a solution of 0.154 M NaCl and 0.1 M HCl.

The barium complex was tested against synthetic brine and production waters from a reservoir in the North Sea. The composition of synthetic brine is: 0.65 M NaCl, 0.01 M $MgCl_2$, 0.01 M $CaCl_2$, 0.0085 KCl, 0.001 M $SrCl_2$, 0.001 M $NaHCO_3$, $10^{-5}$ M $BaCl_2$, and $10^{-5}$ M $Na_2SO_4$.

The production water 1 that was tested has relatively low ionic strength, typically between 0.4 - 0.85 M. It also contains unspecified water soluble organic components because it has been equilibrated with the corresponding oil through the reservoir and production process.

A 1:1 volume ratio was used between the organic and the aqueous solutions in the solvent extraction experiments (4.0 ml of each phase) and in the subsequent back extractions into the saline waters (1.5 ml of each phase). Equilibration was for two minutes and mixed by hand, except when otherwise is noted. The samples were then centrifuged for one minute, to ensure good phase separation. The experiments were carried out at ambient temperature.

## Measurements

Gamma-ray spectroscopy and liquid scintillation counting were used to measure the activity of barium in the samples. Extraction yields were determined by the distribution value, given by

$$D_c = [{}^{133}Ba]_{tot,org,\,eq}/[{}^{133}Ba]_{tot,aq,eq}$$

wherein $[{}^{133}Ba]_{tot,org,eq}$ is the total analytical concentration of the ${}^{133}Ba$ in the organic phase, and $[{}^{133}Ba]_{tot,aq,eq}$ is the total analytical concentration of the ${}^{133}Ba$ in the aqueous phase.

Back-extraction yields are given by $1/D_c$.

Aliquots of 500 $\mu$l of each phase were measured employing a HPGe detector. Liquid scintillation samples were prepared from 400-$\mu$l aliquots. The values were determined by the average of three parallels, and both measuring methods were included for each parallel. The given uncertainties are three standard deviation of the six measurements.

**Results**

**Formation of barium complex**

A barium complex based on short-lived ${}^{137m}Ba$ requires relatively fast formation. Solutions of 40 $\mu$M barium chloride and organic phase were mixed for 15, 30 and 120 seconds to obtain information about the extraction kinetics and the time needed for the extraction system to reach equilibrium. Table 1 lists the $D_c$-values for each mixing time. The $D_c$-values show a rapid formation of the barium-

**Table 1.** Extraction of Ba-DC18C6-HDNNS complex: $D_c$-values for various mixing times.

| Time | 15 s | 30 s | 120 s |
|---|---|---|---|
| $D_c$ | 200$\pm$ 30 | 210$\pm$ 40 | 220$\pm$ 50 |

DC18C6-HDNNS complex, and it is fast enough to complex generator-eluted ${}^{137m}Ba$.

Extraction with different barium chloride concentrations were performed to investigate the possible influence of barium ion-to-complexing agents ratio. Solutions of 40 $\mu$M, 4 $\mu$M, and 0.4 $\mu$M barium chloride were tested, and the measured $D_c$-values are shown in Table 2. These concentrations correspond to a ratio of $10^2$ to $10^5$ between complexing agents and barium ion, and presumably in a tracer generator design the ratio will be >> $10^2$.

**Table 2.** Extraction of Ba-DC18C6-HDNNS complex: $D_c$-values for various aqueous phase barium concentrations.

| [BaCl$_2$] | 40$\mu$M | 4$\mu$M | 0.4$\mu$M |
|---|---|---|---|
| $D_c$ | 220$\pm$50 | 220$\pm$20 | 220$\pm$20 |

**Distribution into saline waters**

The distribution of the barium complex into saline waters was evaluated by back-extraction experiments immediately following the extraction experiments.

It can therefore be concluded that the barium chloride concentration does not influence the $D_c$ value to any significant extent.

The results from back-extraction of the barium complex into synthetic brine and the North Sea production water, referred to as Production water 1, are given in Table 3.

**Table 3.** $D_c$-values for back extraction of Ba-DC18C6- HDNNS complex into synthetic brine and production water from a North Sea reservoir.

| [BaCl$_2$] | 1/$D_c$ | |
| | Production water 1 | Synthetic brine |
|---|---|---|
| 40 $\mu$M | 0.027$\pm$ 0.007 | 0.0030 $\pm$ 0.0007 |
| 4 $\mu$M | 0.026$\pm$ 0.003 | 0.0029 $\pm$ 0.0004 |
| 0.4 $\mu$M | 0.026$\pm$ 0.003 | 0.003 $\pm$ 0.001 |

**Table 4.** $1/D_c$-values for back extraction of Ba-DC18C6- HDNNS complex into various water solutions.

In a separate series of experiments a batch of $^{133}$Ba-DC18C6-HDNNS complex solution was prepared and tested against various saline waters of calcium, barium, and strontium, and production water from two different reservoirs from the North Sea, referred to as production water 2 and 3, respectively. The ionic strength of typical production waters from these two reservoirs are in the range 2.5 to 6 M. That is significantly higher that the ionic strength typical for Production water 1, which is 0.4 to 0.8 M. The higher ionic strength implies that the concentration of calcium and strontium are much higher in Production water 2 and 3 than in Production water 1, typically this could be a factor of 10 or more.

Table 4 shows the back extraction of radioactive $^{133}$Ba into saline solutions of calcium, barium, and strontium and production water 2 and 3.

| Water solution | $1/D_c$ |
| --- | --- |
| 0,27 M $CaCl_2$, 0,15 M NaCl | 0,077 |
| 0,0096 M $BaCl_2$, 0,68 M NaCl | 1,5 |
| 0,0063 M $SrCl_2$, 0,69 M NaCl | 0,24 |
| Production water 1 | 0,027 |
| Production water 2 | 0,18 |
| Production water 3 | 0,54 |

The results demonstrate that +2-cationic species may challenge the radioactive Ba-DC18C6-HDNNS tracer, as the back extraction ratios are > $10^{-2}$. Especially, the radioactive barium in the tracer is subjected to isotope exchange in the presence of high concentrations of natural barium. However, in the intended applications for the radioactive Ba-DC18C6-HDNNS tracer, the possible waters that the tracer may encounter will typically be of much lower barium concentration due to the fact that the water will also contain sulfate anions.

## Conclusion

The extraction of barium ions by HDNNS and DC18C6 in isooctane from aqueous solutions of hydrochloric acid and sodium chloride has been presented. The complex formation rate is relatively fast. The distribution of the barium-DC18C6-HDNNS complex into typical saline solutions is small. Thus, a short-lived barium oil tracer is possible in the coupling of this chemical extraction system with a $^{137}$Cs/ $^{137m}$Ba radionuclide generator.

The thermal stability of the complex itself at elevated temperatures up to 100°C has not been tested. Since the $D_c$-values do not change significantly from the reported ones, the $^{137m}$Ba-DC18C6-HDNNS complex will be a useful tracer for the organic phase in multiphase transport monitoring operations, for example in production and fluid handling equipment like separators and scrubbers.

## Claims

1. Use of a complex comprising one or more substituted 18-crown-6 ether, one or more lipohilic sulfonic acid, and a barium isotope selected from the group consisting of:

    $^{128}$Ba, $^{131}$Ba, $^{133}$Ba and $^{137m}$Ba as a radioactively labelled tracer for studies and measurements of mass transport of a single organic phase or several organic phases in multiphase transport in one or more of the set fluid handling systems, confined tubes, open conduits, porous media and open unconfined flow systems.

2. Use according to claim 1, wherein said complex is produced by a radiotracer generator.

3. Use according to claim 2, wherein said radiotracer generator is a $^{137}$Cs/$^{137m}$Ba/DC18C6+HDNNNS radiotracer generator used in off-line operations and in on-line automatic or remotely operated tracer injections.

4. Use according to claim 1, wherein said multiphase transport involves monitoring of process equipment.

5. Use according to claim 4, wherein the process equipment is oil and gas multiphase separators or scrubbers.

6. Use according to claim 1 in subsea,borehole or reservoir applications.

7. Use according to claim 1, **characterized in that** the the substituted 18-crown-6 ether is selected from the group consisting of: dicyclohexano-18-crown-6, di-(tert-butyl-cyclohexano)-18-crown-6, dibenzo-18-crown-6, and di-(tert-butyl-benzo)-18-crown-6.

8. Use according to claim 1, **characterized in that** the lipophilic sulfonic acid is dinonyl naphthalene sulfonic acid or didodecyl naphthalene sulfonic acid.

9. Use according to claim 1, **characterized in that** the complex comprises $^{137m}Ba$, dicyclohexano-18-crown 6 and dinonyl naphthalene sulfonic acid.

**Patentansprüche**

1. Verwendung eines Komplexes, der ein oder mehrere substituierte 18-Krone-6-Ether, eine oder mehrere Lipophilsulfonsäuren und ein Bariumisotop, ausgewählt aus der Gruppe bestehend aus: $^{128}Ba$, $^{131}Ba$, $^{133}Ba$ und $^{137m}Ba$, umfasst, als einen radioaktiv markierten Tracer für Untersuchungen und Messungen von Massentransport einer einzelnen organischen Phase oder mehrerer organischer Phasen beim Mehrphasentransport in einem oder mehreren der eingestellten Fluidhandhabungssysteme, beschränkten Rohren, offenen Leitungen, porösen Medien und offenen, unbeschränkten Strömungssystemen.

2. Verwendung nach Anspruch 1, wobei der Komplex mit einem Radiotracergenerator hergestellt wird.

3. Verwendung nach Anspruch 2, wobei der Radiotracergenerator ein $^{137}Cs/^{137m}Ba/DC18C6+HDNNNS$ Radiotracergenerator ist, der in offline Operationen und in online automatischen oder entfernt betriebenen Tracerinjektionen verwendet wird.

4. Verwendung nach Anspruch 1, wobei der Mehrphasentransport ein Überwachen der Prozessausrüstung beinhaltet.

5. Verwendung nach Anspruch 4, wobei die Prozessausrüstung Öl- und Gas-Mehrphasenseparatoren oder-wäscher aufweist.

6. Verwendung nach Anspruch 1 in Untersee-, Bohrloch- oder Reservoir-Anwendungen.

7. Verwendung nach Anspruch 1, **dadurch gekennzeichnet, dass** das substituierte 18-Krone-6-Ether ausgewählt ist, aus der Gruppe, bestehend aus: Dicyclohexano-18-Krone-6, Di-(tert-Butylcyclohexano)-18-Krone-6, dibenzo-18-Krone-6 und Di-(tert-Butyl-benzo)-18-Krone-6.

8. Verwendung nach Anspruch 1, **dadurch gekennzeichnet, dass** die Lipophilsulfonsäure eine Dinonylnaphthalin-Sulfonsäure oder eine Didodecylnaphthalin-Sulfonsäure ist.

9. Verwendung nach Anspruch 1, **dadurch gekennzeichnet, dass** der Komplex $^{137m}Ba$, Dicyclohexano-18-Krone-6 und Dinonylnaphthalin-Sulfonsäure umfasst.

**Revendications**

1. Utilisation d'un complexe comprenant un ou plusieurs éthers 18-couronne-6 substitués, un ou plusieurs acides sulfoniques lipophiles, et un isotope de barium choisi dans le groupe constitué par $^{128}Ba$, $^{131}Ba$, $^{133}Ba$ et $^{137m}Ba$ en tant que marqueur radioactif pour des études et des mesures de transport de masse d'une phase organique unique ou de plusieurs phases organiques dans un transport multiphasique dans un ou plusieurs systèmes de traitement d'ensembles de fluides, tubes confinés, conduits ouverts, milieux poreux et systèmes d'écoulement non confinés.

2. Utilisation selon la revendication 1, dans laquelle ledit complexe est produit par un générateur de marqueur radioactif.

3. Utilisation selon la revendication 2, dans laquelle ledit générateur de marqueur radioactif est un générateur de marqueur radioactif $^{137}CS/^{137m}Ba/DC18C6+HDNNNS$ utilisé dans des fonctionnements hors-lignes et dans des injections de marqueurs automatiques en ligne ou commandées à distance.

**4.** Utilisation selon la revendication 1, dans laquelle le transport multiphasique associe un contrôle d'un équipement de traitement.

**5.** Utilisation selon la revendication 4, dans laquelle l'équipement de traitement est des séparateurs ou des épurateurs multiphasiques de pétrole et de gaz.

**6.** Utilisation selon la revendication 1, dans des applications sous-marines, de puits de forage ou de gisements.

**7.** Utilisation selon la revendication 1, **caractérisée en ce que** l'éther 18-couronne-6 substitué est choisi dans le groupe constitué par le dicyclohexano-18-couronne-6, le di-(tert-butyl-cyclohexano)-18-couronne-6, dibenzo-18-couronne-6, et le di-(tert-butyl-benzo)-18-couronne-6.

**8.** Utilisation selon la revendication 1, **caractérisée en ce que** l'acide sulfonique lipophile est l'acide dinonyl-naphtalène sulfonique ou l'acide didodécyl-naphtalène sulfonique.

**9.** Utilisation selon la revendication 1, **caractérisée en ce que** le complexe comprend $^{137m}$Ba, le dicyclohexano-18-couronne-6 et l'acide dinonyl-naphtalène sulfonique.

Fig. 1

# Radiotracer generator

Elution solution

Mother nuclide

Daughter nuclide

Matrix

Complexing agent

Tracer on complexed form

Fig. 2

Fig 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Anal. Chem.,* 1999, vol. 71 (4), 2757-2765
- *Radiochem.,* 2000, vol. 11, 19-22
- *Rad. Protec. Dos.,* 2001, vol. 97 (3), 231-40
- *J. Nucl. Sci. Tech.,* 2002, vol. 39 (4), 447-50
- *J. Chromatog.,* 2011, vol. 1220, 82-91
- *J. Inorg. Nucl. Chem.,* 1973, vol. 35, 3926